# EUROPEAN PATENT SPECIFICATION

(11) **EP 4 164 317 B1**
(45) Date of publication and mention of the grant of the patent: **06.05.2026**
(21) Application number: 22210314.5
(22) Date of filing: 20.12.2013
(51) Int. Cl.: H04W 72/04

(54) **NETWORK-MANAGED DIRECT DEVICE TO DEVICE COMMUNICATIONS**
NETZWERKVERWALTETE DIREKTE VORRICHTUNG-ZU-VORRICHTUNG-KOMMUNIKATIONEN
COMMUNICATIONS DIRECTES DE DISPOSITIF À DISPOSITIF GÉRÉES PAR RÉSEAU

(30) Priority: 21.12.2012 US 201213724020
(43) Date of publication of application: 12.04.2023
(62) Divisional of application: 13863767.3
(73) Proprietor: Malikie Innovations Limited, Dun Laoghaire, Dublin A96 VR66 (IE)
(72) Inventor: NOVAK, Robert, Waterloo, N2K 0A7 (CA); GAGE, William Anthony, Waterloo, N2K 0A7 (CA); MUKHERJEE, Biswaroop, Waterloo, N2K 0A7 (CA)
(74) Representative: Murgitroyd & Company

(56) References cited:
- WO-A1-2010/082084
- WO-A1-2012/129806
- WO-A2-2012/091420
- CN-A- 102 395 160
- US-A1- 2012 113 904

## Description

### CLAIM OF PRIORITY

This application claims priority to U.S. Patent Application Serial No. 13/724,020 filed on December 21, 2012.

### FIELD

This application relates to direct device-to-device (DD2D) communications in a mobile communications network.

### BACKGROUND

Communication networks include wired and wireless networks. Example wired networks include the Public Switched Telephone Network (PSTN) and Ethernet local area networks. Example wireless networks include licensed cellular networks as well as unlicensed wireless networks that connect to wired networks. Calls and other communications may be connected across wired and wireless networks.

In wireless cellular networks, mobile devices generally communicate with each other by transmitting and receiving data traffic through base stations or other similar network nodes, even when the mobile devices are in close proximity. Direct communications between mobile devices in a licensed band without network control can cause interference to other mobile devices operating in the network.

With the proliferation of devices equipped with a cellular modem, direct device-to-device communication offers itself as a potential feature that may significantly enhance the performance of wireless communications technology.

Furthermore proximity-based applications and services represent a recent and enormous social-technological trend. The introduction of a direct communication capability would allow the wireless communications industry to promote this important trend. Additionally, there is also interest in the ability to offload the network in some cases via direct device-to-device communication.

WO2010082084 discloses a network-assisted framework for scheduling radio resources for device-to-device communications.

CN102395160 describes LTE-based control of data transmission between user equipments.

US2012113904 discloses techniques for releasing or implicitly releasing wireless resources.

WO2012091420 discloses establishing a device-to-device link and scheduling D2D resources.

WO2012129806 discloses facilitating device-to-device communication, including mechanisms for link setup and channel-quality related signaling under network coordination

### DESCRIPTION OF DRAWINGS

FIG. 1 is a schematic block diagram of an example mobile communication system.
FIG. 2 is a schematic illustrating an example network node.
FIG. 3 is a schematic illustrating an example user equipment device.
FIG. 4 is a schematic illustrating an example of signaling and traffic for an inter-device session (IDS), where user equipment (UE) communicates signaling feedback to a network node (e.g. an evolved Node B (eNB)).
FIG. 5 is a message sequence diagram illustrating example signal flow and traffic for an inter-device session.
FIG. 6 is a message sequence diagram illustrating an example network operation for an inter-device session.
FIG. 7 is a flow chart illustrating an example process of IDS communications performed by a network node.
FIG. 8 is a graphical diagram showing the sub-band allocation of IDS resources for an inter-device session physical uplink control channel.
FIG. 9 is a flow chart illustrating a second example process of IDS communications performed by a user equipment.

Like reference symbols in the various drawings indicate like elements.

### DETAILED DESCRIPTION

Certain aspects of the disclosure are directed to systems, methods, and apparatuses for providing an inter-device session where the devices can communicate directly, and where the network and the network operator maintain an acceptable level of control over the device to device communication. In the present application, the term "directly" is used to indicate communications between devices and/or communications between a device and a network element without intervening devices. For example, a first UE can transmit data and feedback signaling directly to a second UE without having to transmit the data and feedback signaling to a network element. In the interest of consistency, certain examples in this disclosure may be described in relation to Long Term Evolution (LTE) technology. However, similar device-to-device communications aspects described in this disclosure may also be applied to other wireless communications technologies.

In this disclosure, direct device-to-device communications may be referenced as an inter-device session (IDS). An inter-device session (IDS) may include configuration to allow communication between two or more UEs. For a given IDS resource allocation, one UE in the session may be transmitting in an allotted resource, and other UEs in the session are expected to be receiving in that allotted resource. It should be understood that the IDS resource may be allocated in resources that may previously be considered "uplink" or "downlink" resources. A first UE may transmit over the IDS resource and one or more other UEs will receive the transmission over the IDS resource. Therefore, in some implementations, the IDS resource may be allocated from either "uplink" or "downlink" portions of the resource pool, where the IDS resource is used for inter-device communications.

The term inter-device session is meant to encompass scenarios where two or more devices transmit and/or receive data directly with one another via a radio channel shared by the two or more devices. As such, the term inter-device session may also be referred to as a multi-device session, plural-device session, Direct Device-to-Device(s) (DD2D), LTE Direct, or other representative terms.

In a first example embodiment, an eNB in an LTE system can allocate resources to one user equipment (UE) for direct communication with another UE. In this scheme, only the data traffic may be transmitted directly between the UEs. It should be understood that while data may be transferred from one UE to another UE in an inter-device session (IDS), a network node of a wireless communications network may still be utilized to control aspects of the IDS. For example, a Physical Uplink Control Channel (PUCCH), and other control channels may be used to transmit control information related to an IDS to the eNB from each UE as needed. Additionally, in some embodiments, the UEs may also listen to the other UE's PUCCH, Sounding Reference Signals (SRS) or other reference signal transmissions. Further, control information such as resource allocation, Modulation and Coding Scheme (MCS) for traffic, and power control commands related to an IDS may be transmitted to the UE(s) from the eNB.

In this application, a name with the prefix "IDS" (Inter-Device Session) refers to an entity, resource, or other concept related to the direct UE-to-UE(s) (Device-to-Device(s) (or D2D)) connection (e.g. IDS-PUCCH, IDS-PUSCH, IDS-RNTI) while a name without the "IDS" prefix refers to an entity related to standard UE-to-eNB connections (e.g. PUCCH, physical uplink shared channel (PUSCH), physical downlink shared channel (PDSCH), radio network temporary identifier (RNTI), physical downlink control channel (PDCCH)).

The terms UE1 and UE2 are used here for simplicity and clarity, and are not meant to convey a particular order of the process, a particular actor, or limit the number of devices involved.

Each inter-device session is identified by an inter-device session radio network identifier (RNI) that is assigned by the network node (e.g. eNB) of the wireless communications network. One example of a radio network identifier used in accordance with this disclosure is an IDS radio network temporary identifier (IDS-RNTI). PDCCH/ePDCCH messages related to an IDS may be configured with the IDS-RNTI. Therefore, a UE must attempt to decode PDCCH/ePDCCH messages using the IDS-RNTI(s) assigned to its session(s). This may be done in addition to decoding messages addressed to other RNTIs associated with the UE. The term "configured with" can include, among other things, configured by, corresponding to, addressed to, directed to, scrambled with, encoded with, portion encoded with (e.g. cyclic redundancy check (CRC) scrambled with the RNI, such that the control message can be determined to be addressed to a UE that knows the RNI), referencing, etc.

IDS resource allocations signalled in the PDCCH/ePDCCH and configured with the IDS-RNTI may indicate grants for direct UE-to-UE transmissions. IDS resource allocations may be signalled in control messages sent from the eNB to one or more UEs participating in the inter-device session. In one embodiment, control messages are sent to all the UEs participating in the inter-device session, such that the UEs are all made aware of the IDS resource allocations being granted for the inter-device session. In an embodiment where the IDS-RNTI refers to a session with two or more UEs, the IDS resource allocation configured with the IDS-RNTI may also be configured with a UE session ID associated with one of the UEs in the IDS (for example, the grant of the IDS resource allocation may include the UE session ID of the UE that should transmit using the IDS resource).

In an alternate embodiment, there may be more than one IDS Radio Network Temporary Identifier (RNTI) assigned for an inter-device session. For example, a first IDS-RNTI is assigned to indicate transmission from a first UE to a second UE, while a second IDS-RNTI may be assigned to indicate transmissions from the second UE to the first UE. In this alternate embodiment, each IDS-RNTI may be assigned for a particular transmission direction, or more specifically, to a particular UE that may act as a transmitter in the inter-device session. In this alternate embodiment, the network node (e.g. eNB) may maintain a group context that includes a first UE's unique IDS-RNTI, and the other UEs that are configured to receive transmission from the first UE.

Advantages of using the IDS-RNTI as described in this disclosure may be numerous. For example, the network node (e.g. eNB) can use the IDS-RNTI to control allocation for each transmission thereby ensuring that UE-UE communications do not interfere with neighbouring UEs. Meanwhile sharing the IDS-RNTI with UEs participating in the inter-device session may reduce channel utilization since one Physical Downlink Control Channel (PDCCH) transmission is used to signal allocations for both the transmitter and receiver.

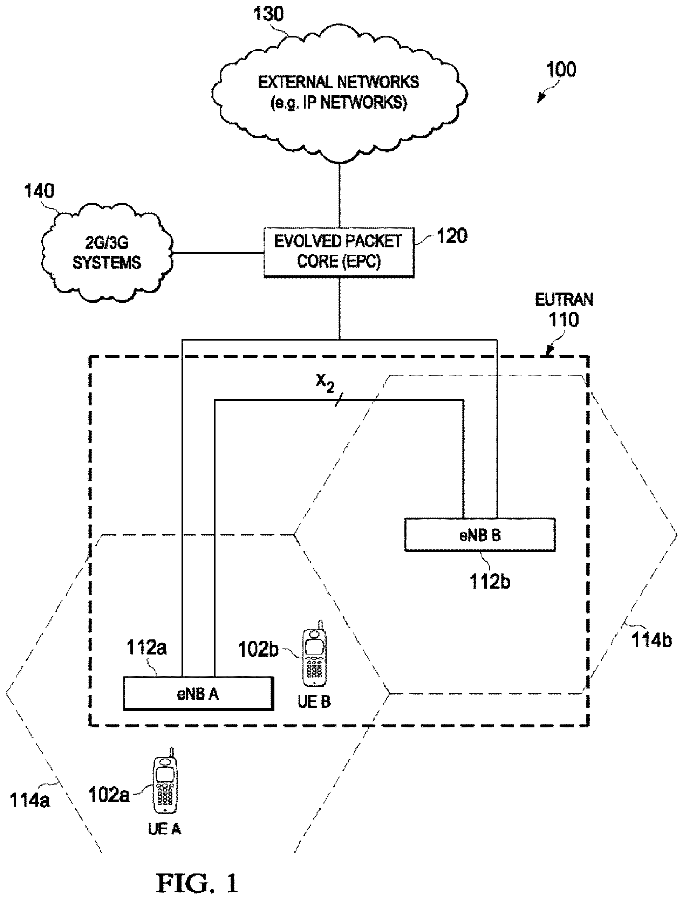

FIG. 1 is a schematic block diagram of an example mobile communication system 100. The mobile communication system 100 shown in FIG. 1 may include one or more network nodes (e.g., 112a and 112b). It will be understood that the network node may take several forms in a mobile communication system, such as (but not limited to) an evolved Node B (eNB), a base station, a Node B, a wireless access point, a radio network controller, a base transceiver station, a layer two relay node, a layer three relay node, a femto cell, home evolved Node B (HeNB), a home Node B (HNB), a base station controller, or other network node that includes radio resource control. In the long term evolution (LTE) example of FIG. 1, the network nodes are shown as evolved Node Bs (eNBs) 112a and 112b. The example mobile communication system 100 of FIG. 1 may include one or more radio access networks 110, core networks (CNs) 120, and external networks 130. In certain implementations, the radio access networks 110 may be evolved- UMTS terrestrial radio access networks (E-UTRAN). In addition, in certain instances, core networks 120 may be evolved packet cores (EPCs). Further, there may be one or more mobile electronic devices 102a, 102b operating within the mobile communication system 100. In some implementations, 2G/3G systems 140, *e.g.,* Global System for Mobile communication (GSM), Interim Standard 95 (IS-95), Universal Mobile Telecommunications System (UMTS) and CDMA2000 (Code Division Multiple Access) may also be integrated into the mobile communication system 100.

In the example LTE system shown in FIG. 1, the radio access network 110 includes eNB 112a and eNB 112b. Cell 114a is the service area of eNB 112a, and Cell 114b is the service area of eNB 112b. In this example, UEs 102a and 102b operate in Cell 114a and are served by eNB 112a. The UEs 102a and 102b may be any electronic device used by an end-user to communicate, for example, within the mobile communication system 100. The UEs 102a and 102b may transmit voice data, video data, user data, application data, multimedia data, text, web content and/or any other content.

The UE 102a or 102b may be referred to as mobile electronic device, user device, mobile station, subscriber station, portable electronic device, mobile communications device, wireless modem, or wireless terminal. Examples of a UE (e.g. UE 102a or 102b) may include a cellular phone, personal data assistant (PDA), smart phone, laptop, tablet personal computer (PC), pager, portable computer, portable gaming device, wearable electronic device, or other mobile communications device having components for communicating voice or data via a mobile communication network.

Other examples of a UE include, but are not limited to, a television, a remote controller, a set-top box, a computer monitor, a computer (including a tablet, a desktop computer, a handheld or laptop computer, a netbook computer), a microwave, a refrigerator, a stereo system, a cassette recorder or player, a DVD player or recorder, a CD player or recorder, a VCR, an MP3 player, a radio, a camcorder, a camera, a digital camera, a portable memory chip, a washer, a dryer, a washer/dryer, a copier, a facsimile machine, a scanner, a multi-functional peripheral device, a wristwatch, a clock, and a game device, etc. The UE 102a or 102b may include a device and a removable memory module, such as a Universal Integrated Circuit Card (UICC) that includes a Subscriber Identity Module (SIM) application, a Universal Subscriber Identity Module (USIM) application, or a Removable User Identity Module (R-UIM) application. Alternatively, the UE 102a or 102b may include the device without such a module. The term "UE" can also refer to any hardware or software component that can terminate a communication session for a user. In addition, the terms "user equipment," "UE," "user equipment device," "user agent," "UA," "user device," and "mobile device" can be used synonymously herein.

A radio access network is part of a mobile communication system which implements a radio access technology, such as UMTS, CDMA2000 and 3GPP LTE. For example, the radio access network (RAN) 110 included in an LTE telecommunications system is called an EUTRAN. The EUTRAN can be located between the UEs and core network 120 (e.g. an evolved core network, EPC). The EUTRAN includes at least one eNB. The eNB can be a radio base station that may control all or at least some radio related functions in a fixed part of the system. The at least one eNB can provide radio interface within their coverage area or a cell for the UEs to communicate. The eNBs may be distributed throughout the cellular network to provide a wide area of coverage. The eNBs directly communicate with one or more UEs, other eNBs, and the core network.

This disclosure describes several ways that an inter-device session may be initiated. For example, a UE could initiate an inter-device session responsive to a user action, the presence of data at the device intended for a potentially nearby device, detection of signals from a proximate device, or an in-device application exchanging location information with other devices. Alternatively, the network could create an inter-device session at its discretion, based on one or more of the following factors: UE location, network traffic, operator policies, user subscription and UE capabilities.

Once it is determined that attempting an IDS connection between two or more UEs is appropriate, the eNB sends IDS configuration information to the UEs to enable the inter-device session. IDS configuration information for each UE may include the IDS-RNTI and a UE session ID used to identify the UE within this IDS as well as the SRS and IDS PUCCH channel assigned to the UE. The IDS configuration information may also be used to facilitate various aspects such as timing and Channel Quality Indicator (CQI) feedback.

Furthermore, if the UE is transmitting and/or receiving in multiple inter-device sessions, the eNB may assign multiple IDS-RNTIs to the UE. The eNB may maintain an IDS group context for each inter-device session in the eNB coverage area. The IDS group context may include the IDS-RNTI for each UE in the inter-device session, a UE session ID (if configured) for the UE, and identifiers of other UEs that may be part of the inter-device session.

A transmitting UE may align its IDS-transmit-timing with a transmission resource subframe as directed by the network node timing. The UE may adjust its IDS transmission timing according to a timing advance command from the network node. For example, a first UE (UE1) may be sent a timing advance command from the eNB to adjust UE1's timing for transmitting IDS transmissions using an IDS. A second UE (UE2) may receive the IDS transmissions according to a timing reference detected from UE1. For example, UE1 may be configured with SRS or other reference signal (RS) which UE2 can receive from UE1 to determine receive window timing for IDS transmissions. In this example, the eNB must provide UE2 with information on location/configuration of UE1 RS/SRS. It should be noted that the RS/SRS configuration may be specific for the IDS or may be the same RS/SRS configuration used by UE1 for communication with the eNB.

As described previously, an IDS resource may use UL radio resources or DL radio resources. For time division duplex (TDD) implementations, the IDS resource allocation may include assignment of particular subframes. For frequency division duplex (FDD) implementations, the IDS resource allocation may include assignment of particular sub-band frequencies. In other implementations, the IDS resource allocation may include assignment of particular component carriers.

For example, in some embodiments, a UE may not be able to transmit and receive UE-UE (IDS) and UE-eNB transmissions at the same time. Considering an example where UL radio resources are used for the IDS resource allocations, the eNB may allocate the IDS resource such that a UE receives IDS transmissions in an UL subframe that is different from another UL subframe that the UE uses for other uplink transmissions to the eNB. In other words, the eNB may not schedule a UE as the receiving UE in an IDS assignment in a subframe where the UE is scheduled to send a PUCCH, IDS-PUCCH, SRS, or UL-SCH transmission. In addition, the eNB may assign PUCCH and IDS-PUCCH transmission to occur in different UL subframes for UEs on the same inter-device session in order to allow for UEs in the session to receive and/or measure the other UEs PUCCH/IDS-PUCCH for the purposes of CQI and/or timing. Just as UL subframes and UL radio resources may be scheduled to avoid overlap with other UL operations of a UE, there may be implementations where DL radio resources are used for IDS resource allocations and scheduling is carefully done to avoid overlap with other DL operations of a UE. In some FDD embodiments, a UE may be able to receive both IDS-PUSCH transmissions and PDSCH transmissions in the same subframe on different carriers. In other embodiments, a UE may only be able to receive either an IDS-PUSCH transmission or a PDSCH transmission, but not both, within a given subframe. The capabilities of the UE are signaled to the eNB during RRC connection configuration.

The eNBs 112a and 112b may be the end point of the radio protocols towards the UEs 102a, 102b and may relay signals between the radio connection and the connectivity towards the core network 120. In certain implementations, the EPC may be the main component of a core network 120. The core network 120 may include a backbone network, which may be a central part of the mobile communication system 100. The core network 120 may include other components, such as (but not limited to) a mobility management entity (MME), a serving gateway (SGW), and/or a packet data network gateway (PGW). The MME may be the main control element in the core network 120 responsible for the functionalities comprising the control plane functions related to subscriber and session management. The SGW can serve as a local mobility anchor, such that the packets are routed through this point for intra radio access network 110 (e.g. intra-EUTRAN) mobility and mobility with other legacy 2G/ 3G systems 140. The SGW functions may include the user plane tunnel management and switching. The PGW may provide connectivity to the services domain comprising external networks 130, such as the IP networks. The UEs 102a, 102b, radio access network 110 (e.g. EUTRAN), and core network 120 (e.g EPC) are sometimes referred to together as the evolved packet system (EPS).

Though described in terms of FIG. 1, the present disclosure is not limited to such an LTE environment.

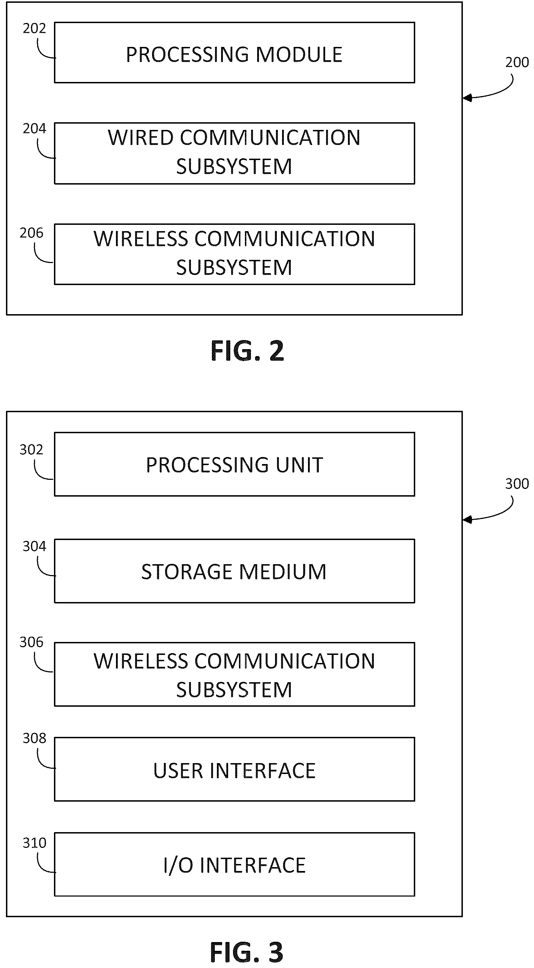

FIG. 2 is a schematic illustrating an example network node 200. The example network node 200 includes a processing module 202, a wired communication subsystem 204, and a wireless communication subsystem 206. The processing module 202 can include one or more processing components (alternatively referred to as "processors" or "central processing units" (CPUs)) operable to execute instructions associated with managing inter-device communications. The processing module 202 can also include other auxiliary components, such as random access memory (RAM), read only memory (ROM), secondary storage (for example, a hard disk drive or flash memory). The processing module 202 can execute certain instructions and commands to provide wireless or wired communication, using the wired communication subsystem 204 or a wireless communication subsystem 206. A skilled artisan will readily appreciate that various other components can also be included in the example network node 200.

The network node may establish an inter-device session by sending IDS configuration information (e.g. RRC connection reconfiguration) to each UE that will be part of the inter-device session. For example, the IDS configuration information may be sent in a configuration message (e.g. an RRC message) to each UE in the inter-device session. It should be understood that the IDS configuration information may not be identical for each UE in the IDS, but the IDS configuration information sent to each UE includes the configuration needed for the UE to participate in the IDS. The IDS configuration information may include an IDS-RNTI used to configure other IDS-related control messages to the UE. For example, the network node sends a control message to indicate an allocation of IDS resources (e.g. IDS-PUSCH/PDSCH) for at least the transmitting UE in the inter-device session using a PDCCH DCI configured with the IDS- RNTI. In addition, in some implementations, other control messages may be sent using a PDCCH DCI configured with the IDS-RNTI.

The network node may manage the power level of the IDS transmissions based on the level of the signal from the transmitting UE received by the receiving UE. The receiving UE may indicate the received signal level to the network node, such that the network node may send a command to the transmitting UE to adjust the power level for subsequent IDS transmissions. For purpose of adjusting the power levels, the network node may configure a special transmit power control RNTI for the IDS for a given UE, including an TPC-IDS-RNTI (to identify transmit power commands for the IDS transmissions by the UE) in the IDS configuration information. In some embodiments, the power level may be increased until an upper limit is reached. When the power level is beyond a limiting threshold for a UE, the network node may determine that the inter-device session is no longer appropriate and cause the inter-device session to terminate.

In some variants of this embodiment, power control commands may be specific for either IDS-PDSCH communications in normally DL radio resources or IDS-PUSCH communications in normally UL radio resources for a given UE. In this variant, the network node may configure special transmit power control RNTIs for the IDS for a given UE, including an IDS-TPC-PUSCH-RNTI (to identify transmit power commands for the IDS-PUSCH) and/or IDS-TPC-PDSCH-RNTI (to identify transmit power commands for the IDS-PDSCH) in the IDS configuration information. Once configured, the network node may use special transmit power control RNTIs to signal separate commands to adjust power for IDS communications for a UE in UL radio resources separately from those in DL radio resources.

In some further variants of the embodiment, the network node may configure special transmit power control RNTIs for the IDS for a given UE, including an IDS-TPC-SCH-RNTI (to identify transmit power commands for IDS user data transmissions) and/or IDS-TPC-CCH-RNTI (to identify transmit power commands for IDS control data transmissions) in the IDS configuration information. Once configured, the network node may use special transmit power control RNTIs to signal separate commands to adjust power for IDS communications for a UE separately from the power levels used for UL (UE-eNB) communications.

In some embodiments where the receiving UE determines the received signal level of the IDS transmission from an SRS, or other reference signal from the transmitting UE, the transmitting UE may also be instructed to adjust the power level for the reference signal in subsequent transmissions.

In some embodiments, the initial transmit power level for IDS transmissions is the same as for UE to eNB UL transmissions. In other embodiments, the initial transmit power level is communicated to a UE by the eNB during IDS configuration.

Additionally, to gain more accurate timing for the synchronization of the receive window, the eNB may provide a UE with information on the location and configuration of the other UE's PUCCH and/or SRS (if available) or other reference signal (if available).

FIG. 3 is a schematic illustrating an example UE apparatus. The example UE 300 includes a processing unit 302, a computer readable storage medium 304 (for example, ROM or flash memory), a wireless communication subsystem 306, an interface 308, and an I/O interface 310. The wireless communication subsystem 306 may be configured to provide wireless communications for data information or control information provided by the processing unit 302. The wireless communication subsystem 306 can include, for example, one or more antennas, a receiver, a transmitter, a local oscillator, a mixer, and a digital signal processing (DSP) unit. In some embodiments, the wireless communication subsystem 306 can support multiple input multiple output (MIMO) transmissions.

The interface 308 can include, for example, one or more of a screen or touch screen (for example, a liquid crystal display (LCD), a light emitting display (LED), an organic light emitting display (OLED), a microelectromechanical system (MEMS) display), a keyboard or keypad, a trackball, a speaker, and a microphone. The I/O interface 310 can include, for example, a universal serial bus (USB) interface. A skilled artisan will readily appreciate that various other components can also be included in the example UE device 300. The interface 308 may be a hardware interface that permits/facilitates communication between two devices.

A UE may indicate to a network node that the UE has data to send to another UE. For example, the UE may transmit an explicit radio link protocol indication requesting an inter-device session with another UE. Alternatively, the UE may simply send data destined to a network address associated with the other UE. In the typical embodiment, the network node will determine whether or not to attempt establishment of an inter-device session. In one embodiment, the network node may configure a reference signal in inter-device session setup commands to a transmitting UE and a receiving UE. The reference signal is transmitted by the transmitting UE and received by the receiving UE to determine whether the two UEs are in-range to directly communicate. The reference signal may also be used to determine receive timing window and channel state information (CSI). A receiving UE may send a feedback message to the network node to indicate CSI based upon the received reference signal. Alternatively, the receiving UE may send CSI based upon detection of PUCCH RS or SRS transmissions from the transmitting UE. In this alternative, the network node provides the location and/or configuration of PUCCH RS or SRS of the transmitting UE to the receiving UE so that the receiving UE can detect these transmissions. In some variants of this alternative, the network node may provide a C-RNTI, IDS-RNTI, or other RNTI of the transmitting UE to the receiving UE so that the receiving UE is configured to detect the PUCCH transmissions. From feedback about channel state information, the network node may determine to establish the inter-device session. The feedback may also be used by the network node to determine appropriate IDS resource allocations.

In some embodiments, the transmitting UE may send an IDS transmission with the same subframe timing as other UL transmissions intended for the eNB. In some embodiments, the UEs in an inter-device session may be closer to each other than they are to the eNB. In some of these cases, the receiving UE may initially use its UL transmission timing to estimate the receiving window timing of UE to UE transmissions. Finer adjustments to the receive window may be made from reception of one or more of IDS-PUSCH transmissions, PUCCH transmissions, IDS-PUCCH transmissions (if available), and SRS transmissions or other reference signals (if available) from the transmitting UE.

In implementations where IDS resources are allocated from DL radio resources, the UEs may send their IDS transmissions at a time offset relative to UL timing as specified by the eNB. In some embodiments, the receiving UE may require a signal from the transmitting UE in order to estimate appropriate timing of the receive window for IDS transmissions prior to the initial reception of IDS-PDSCH transmission. In this case, the receiving UE may use one or more of the SRS or other reference signals or PUCCH or IDS-PUCCH from the transmitting UE.

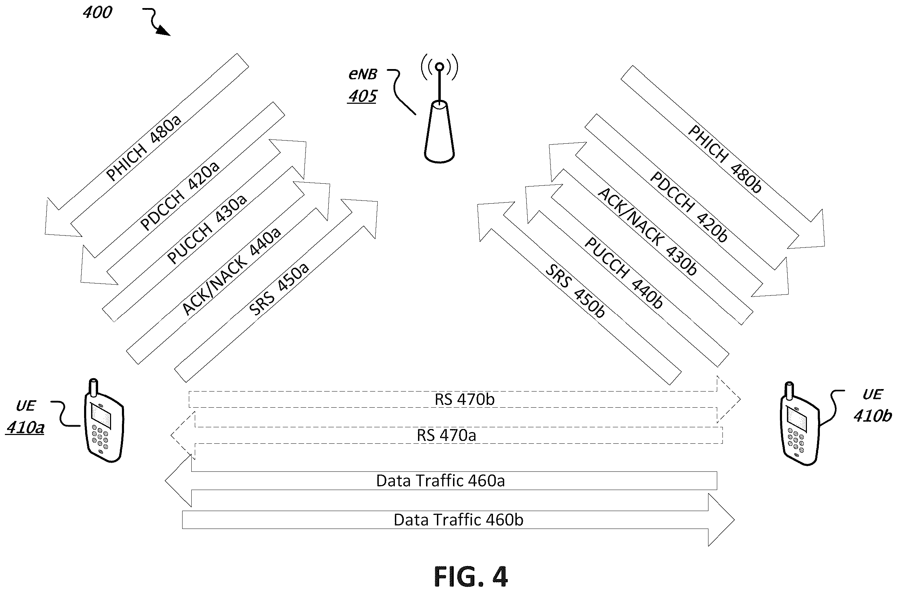

FIG. 4 is a schematic diagram illustrating an example environment 400 showing signaling and traffic for an inter-device session, where user equipment (UE) 410a and 410b communicate signaling feedback to the network node 405 (e.g. eNB). In FIG. 4, data traffic 460a and 460b may be transmitted directly between the UEs; the control elements PDCCH (420a and 420b) are transmitted to the UEs from the eNB while IDS- PUCCH (430a and 440b) and IDS related ACK/NACK (440a and 430b) and SRS (450a and 450b) are transmitted to the eNB from each UE and may, in some embodiments, be received by the other UE (470a and 470b). These control elements are described below:

PDCCH (420a and 420b): Physical Downlink Control CHannel. A downlink control channel used to support efficient data transmission in LTE. A PDCCH carries a message known as Downlink Control Information (DCI), which may include IDS transmission resource assignments and other control information for a specific UE within an inter-device session or for all UEs within a session. During the inter-device session, a PDCCH message configured via IDS-RNTI may be used to allocate IDS resources to a UE within the session designated as the transmitter within that subframe. The subsequent IDS transmissions may occur over regular PUSCH/PDSCH resources designated by the DCI. HARQ operation, power control and timing adjustments may be included in the DCI by the eNB for the inter-device session. Further, certain transmission multiplexing and session procedures may be used to properly schedule various transmission reception windows for the UEs, as well as minimization of assigned resources during inactivity. In certain implementations, for an IDS allocation, one control message (e.g. PDCCH) may be sent from the eNB that is received and decoded by both transmitting and receiving UEs. In some cases, the HARQ information regarding an IDS transmission can be indicated on a physical HARQ indicator channel (PHICH) (480a and 480b) from the eNB that is decoded by the transmitting IDS UE.

PUCCH (430a and 440b): PUCCH (430a and 440b): Physical Uplink Control CHannel. The LTE uplink physical channel carrying uplink control information including Channel Quality Indicators (CQI), Hybrid Automatic Retransmission reQuest (HARQ) ACKnowledgment/Negative ACKnowledgment (ACK/NACK) and uplink scheduling requests. In some embodiments, in addition to its normal PUCCH, a UE is configured with an IDS-PUCCH for each inter-device session in which the UE participates.

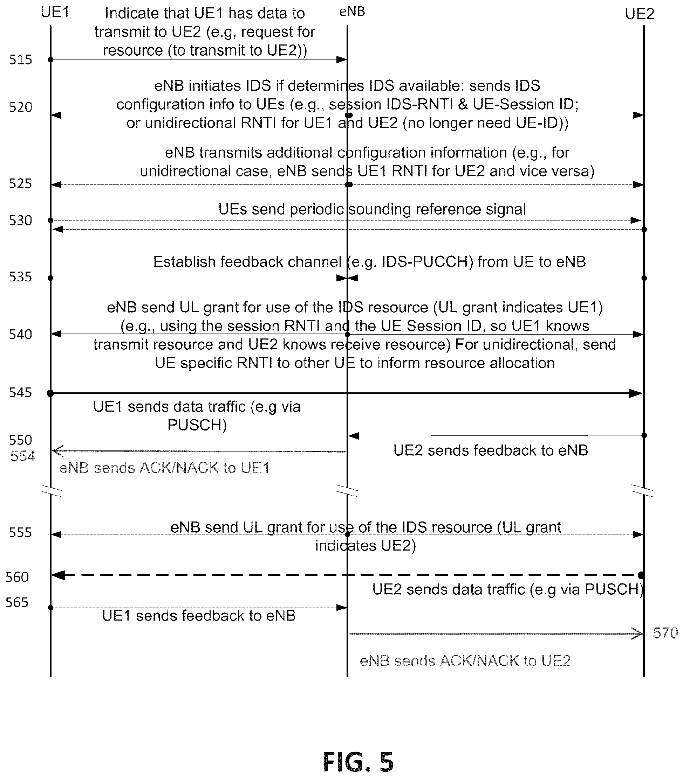

FIG. 5 is a message sequence diagram 500 illustrating example signal flow and traffic for an inter-device session. A first UE, referred to as UE1, may indicate to a network node that UE1 has data to send to a second UE, referred to as UE2 (515). It is understood that UE1 may want to send data to a single UE, UE2, or may want to send data to multiple UEs, such as in a multicast or broadcast session. To that extent, the indication sent by UE1 and received by the network node indicates that UE1 wants to send data to at least UE2, and possibly other UEs. The indication can be a radio link protocol request, or the indication may be a data packet destined for the network address assigned to UE2. Other indications are also contemplated. For example, UE1 may not have a preference as to whether UE1 communicates in an inter-device session, or UE1 may specifically request an inter-device session. The network node may decide, based on network conditions, location of the UEs, operator policies, etc., whether or not the inter-device session is possible. If the network node determines that an inter-device session is possible, the eNB then sends information to start the session to each UE (520). For example, the eNB may send IDS-configuration information to the UEs. Such IDS-configuration information can include the reference signals to be transmitted and received to determine the proximity of the UEs and a radio network identifier for the IDS, which may be referred to as an IDS radio network temporary identifier (IDS-RNTI).

This disclosure describes multiple ways that an IDS-RNTI may be used in an inter-device session. A first example embodiment described herein includes an IDS-RNTI that may be referred to as a "session IDS-RNTI." A session IDS-RNTI is used when the same IDS-RNTI is shared by all UEs participating in the inter-device session. All UEs in the inter-device session may be able to detect and decode the same control messages transmitted in the PDCCH from the eNB. If the eNB uses a session IDS-RNTI, the eNB may also configure each UE in the IDS with a session UE-identifier (UE-ID) unique to each UE within the inter-device session. The UE-ID allows the eNB to identify each UE within the session and allows the UEs to identify each other as part of the inter-device session communications. In such a scenario, the control message may also include the UE-ID to indicate a particular UE associated with the control message. For example, if a UE receives a control message configured with the IDS-RNTI, the UE can check for the UE-ID to determine if the instruction indicates the UE's UE-ID or if the instruction indicates another UE's UE-ID.

A second example embodiment described herein includes IDS-RNTIs that may be referred to as "unidirectional IDS-RNTI" for each UE. For the unidirectional case, additional configuration information may be transmitted to the UEs (525). A unidirectional IDS-RNTI is used to indicate commands, messages, and/or feedback that are related to transmissions in one direction - from a first UE to a second UE, but not vice versa. Typically, but not necessarily, there will be two or more unidirectional IDS-RNTIs assigned for an inter-device session. For example, a first IDS-RNTI may be assigned to indicate transmissions from UE1, while a second IDS-RNTI may be assigned to indicate transmissions from UE2. The eNB may send control messages in the PDCCH configured with the unidirectional first IDS-RNTI to indicate transmission from UE1. All UEs in the inter-device session may be able to detect and decode the same control messages transmitted in the PDCCH from the eNB. The eNB may send other control messages in the PDCCH configured with the unidirectional second IDS-RNTI to indicate transmission from UE2. Note that the unidirectional IDS-RNTI for a transmitting UE may also be indicated to receiving UEs during configuration of the inter-device session. In some embodiments using the unidirectional IDS-RNTIs, a UE may be configured with two or more IDS-RNTIs (one that is specific for the IDS transmissions sent by the UE and other IDS-RNTIs used by other transmitting UEs from which IDS transmissions may be received).

The eNB communicates the IDS-RNTI (either session IDS-RNTI or unidirectional IDS-RNTIs) as IDS configuration information to a UE. The IDS configuration information may also include a dedicated supplemental PUCCH allocation (IDS-PUCCH) for IDS feedback or other IDS uplink requests to eNB. It should be understood that the IDS-PUCCH may be in addition to a PUCCH for conventional UE-eNB operations. In the embodiment with a session IDS-RNTI, the IDS configuration information may also include the UE-ID for a particular UE in the inter-device session.

In some embodiments, additional IDS configuration information may be sent, including a dedicated RNTI (TPC -IDS-RNTI) for power control commands sent to a particular UE to control power of IDS transmissions. The IDS configuration may include periodic SRS configuration or other reference signal (RS) configurations specific to the IDS. IDS configuration information may also indicate an initial transmit power level for the IDS transmissions. Additionally, in some instances, the eNB will indicate how the UEs are to measure the signal strength from the other UE. In such cases, the eNB may include the other UE's session ID (within the existing UE to UE session), SRS cyclic shift and configuration, and PUCCH RS location and configuration.

In some embodiments, on receiving configuration information from the eNB, one or more of the UEs involved in the session setup may transmit a reference signal (IDS-RS) or sounding reference signal (IDS-SRS) as directed by the eNB session setup commands (530). The IDS-RS/SRS transmission may be used by the other UEs to determine whether they are in-range to communicate and, if they are, to determine receive timing window and channel state information (CSI). In some embodiments, these IDS-RS/SRS transmissions may be the same as RS/SRS used for conventional channel sounding between the UE and eNB. If used, the location and cyclic shift/base sequence for (IDS-)SRS assigned to one UE of the attempted UE to UE session is given to the other UE. In this manner, the UEs may determine if there is sufficient signal strength received from the other UE. This information is transmitted to the eNB on the IDS-PUCCH assigned to a UE. In some embodiments, if sufficient signal strength is received from the other UE, and both UEs communicate this information to the eNB, then the inter-device session may proceed. During the inter-device session the (IDS-)SRS, if assigned, may be used for, among other things, timing alignment, which may include receive window alignment by the receiving UE, timing advance adjustment by eNB to adjust transmission timing and CQI estimation by the receiving UE. In some embodiments, the UE may use IDS MAC control elements to indicate CQI per transmitter. Signaling using IDS MAC control elements may be particularly useful in cases where multiple possible transmitters are defined in the session for a given receiving UE. In an another embodiment, signal quality and timing information is derived from the reference signals associated with the PUCCH or IDS-PUCCH of the other UE.

An IDS specific PUCCH may be assigned to each UE for communicating information to the eNB regarding the inter-device session channel. This may be a new PUCCH allocation in addition to a conventional PUCCH allocation for UE to eNB feedback, or it may be a replacement of the conventional PUCCH with IDS-PUCCH, or the assignment may be a replacement of one or more periodic occurrences of the conventional allocated PUCCH (for example, IDS-PUCCH replaces PUCCH every n^{th} occurrence).

In addition to the configured replacement of PUCCH by IDS-PDCCH described, the eNB may allocate different resources for the PUCCH, for example, through the *cqi-PUCCH-ResourceIndex* in the CQI-ReportConfig IE, or allocate different periodicities or subframes to differentiate the IDS-PDCCH and PDCCH transmission received at the eNB. In some of these embodiments, the C-RNTI of the UE is used to scramble the PUCCH UCI format 2/2a/2b/3, or other control signalling formats scrambled by an RNTI, when used. In some variant embodiments, the IDS-RNTI is used to scramble IDS-PUCCH UCI format 2/2a/2b/3, or other control signalling formats scrambled by an RNTI, when used. Scrambling by IDS-RNTI may be useful to differentiate the IDS-PUCCH transmissions from the PUCCH transmission, and this may enable the UE to selectively transmit either one in a given PUCCH allocation. Other UEs in the inter-device session may make use of reference signals of the PUCCH and/or IDS-PUCCH transmissions for CQI and timing information.

The IDS-PUCCH transmission may have the same functionality and format as the conventional PUCCH, except that its contents (CSI, CQI, ACK, SR, etc.) pertain to the IDS channel and IDS transmissions. The function of the IDS-PUCCH includes providing feedback from a receiving UE to the eNB related to the channel conditions and received signal from the other UE when there are only two UEs in an inter-device session (535). In some embodiments, feedback may be given for the transmitting UE when there are more than two UEs in the inter-device session but there is only one transmitting UE. In another embodiment, a UE may determine the worst CQI of multiple transmitters (by receiving and measuring other UEs signals) and report that to the eNB as the CQI of the inter-device session to reduce CQI signalling. The IDS PUCCH can be used for other functions including sending IDS HARQ ACK/NACK responses to UE-to-UE packets to the eNB, making scheduling requests to the eNB (e.g. so that the requesting UE may be assigned IDS transmission resources), and in some cases providing a UL reference signal for the other UEs to measure for making CQI/timing measurements. The IDS-PUCCH message may be configured by LTE PUCCH format 1/1a/1b or format 3 when CSI is not included, and format 2, LTE PUCCH format 2a or LTE PUCCH format 2b when CSI is included.

For IDS related ACK/NACK transmission, the UE may use the UE specific assigned IDS-PUCCH resources for transmission of a message configured as LTE PUCCH format 2a or LTE PUCCH format 2b type transmissions, and in cases of extended cyclic prefix, Format 2. The IDS related ACK/NACK transmissions to the eNB may also be sent on IDS-PUCCH configured resources for LTE PUCCH format 1a or LTE PUCCH format 1b type message configurations. In some embodiments for IDS-PUCCH messages configured as LTE PUCCH format 1a or LTE PUCCH format 1b, a resource of the IDS-PUCCH transmission to the eNB can be derived from a mapping of an index of a control channel element (CCE) used to send a PDCCH DCI IDS allocation to the designated transmitter in an inter-device session.

Format 1a/1b is a scheme in LTE, in which ACK/NACK is sent according to a mapping of downlink resources. The ACK/NACK feedback is sent on PUCCH (or IDS-PUCCH) based on the mapping of downlink control message resources (i.e. the ACK/NACK feedback resource is not UE specific or pre-assigned for a particular UE, but instead is simply determined based upon the downlink control message transmission).

Format 2a/2b is a scheme in LTE in which the ACK/NACK feedback is sent on a PUCCH resource that is assigned to a particular UE. Format 2a/2b is typically used for CQI reporting, but it is possible to include ACK/NACK feedback with the CQI. Format 2 is used for extended cyclic prefix configurations, or reporting without ACK/NACK feedback in UE assigned resources.

Format 3 is a scheme in LTE for sending a large number of ACK/NACK bits. The ACK/NACK feedback is scrambled by the C-RNTI of the UE providing the feedback such that the eNB can determine which UE is providing the feedback.

In some embodiments, the resources assigned to a UE for IDS-PUCCH transmissions (e.g. LTE Format 2, 2a or 2b), and/or the resources allocated for IDS related ACK/NACK responses without CQI (e.g. LTE Format 1a or 1b), may be different from the resources assigned for non-IDS PUCCH transmissions.

With regard to ACK/NACK feedback, it should be understood that the above mentioned feedback formats used in conventional PUCCH operation may be applied to the feedback regarding the IDS transmissions. The ACK/NACK feedback describes the feedback about the IDS transmission, but is provided by the receiving UE to the eNB. With regard to RS/SRS operations described above, the operation is used by the UEs to measure the channel and provide feedback to the eNB regarding the channel between the UEs. This may be instead of, in addition to, or replaced by the standard PUCCH SRS transmission, if present. In embodiments where the IDS-PUCCH may be used for the CQI measurement of the UE to UE channel, the CQI estimate may be approximate as the IDS-PUCCH may be transmitted on the band edges. In this configuration, the IDS-PUCCH CQI estimate may not be a valid estimate of the sub-band CQI.

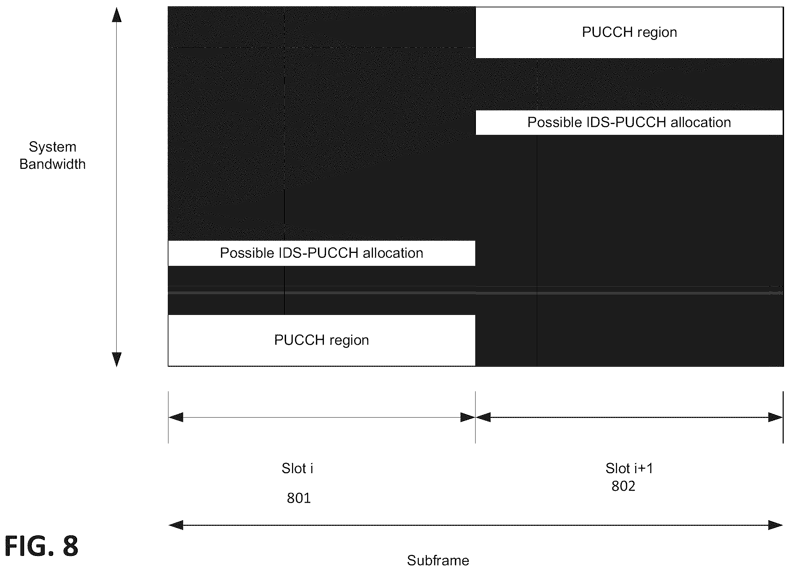

In a variant of this embodiment shown in FIG. 8, the IDS-PUCCH may be defined within the PUSCH region and not at the band edges. FIG. 8 is a graphical diagram showing the sub-band allocation of resources for an inter-device session physical uplink control channel. This is different from the normal LTE PUCCH location assignments. In this variant of the embodiment, the IDS PUCCH is located in the PUSCH region in order to provide RS for the other UE to measure in order to determine sub-band CQI estimates. The IDS-PUCCH (801 and 802) locations are assigned in pairs, with a different location per slot for slot i (801) and slot i+1 (802), as for PUCCH, with the exception that the locations are not at the band edges.

Either UE1 or UE2 or both of them send an IDS-PUCCH message to the eNB indicating CSI of the received SRS, or PUCCH RS or other reference signal from the other UE. From this feedback, the eNB determines whether it is feasible to start IDS resource allocations. Then, eNB sends an allocation for IDS resources using a PDCCH DCI configured with the inter-device session (IDS) RNTI (540).

IDS resources for direct UE to UE transmission are allocated via grants contained in the PDCCH, ePDCCH or other DL control channels. A resource allocation configured with the IDS-RNTI is sent in a DL control channel (for example, the PDCCH region of the subframe) using downlink control information (DCI) formats. For example, if a session IDS-RNTI is used, this allocation uses a Format 0 or 4 DCI with one additional field to indicate the transmitter granted use of the resources; the transmitter is identified by the session UE-identifier (UE-ID) provided to the UE by the eNB in the session setup message. The additional field is not required, however, for IDS-RNTIs defined for the transmitter (e.g. unidirectional IDS-RNTI). The other UE(s) configured to use the IDS-RNTI are implicitly assigned the role of receiver for this resource allocation. The timing of the UE transmission using the indicated IDS resources is relative to the grant transmission and is derived by the UEs from the timing of the grant and the network configuration.

Both UE1 and UE2 decode which includes information on which UE is transmitting (UE1 in this example).

Using the resources indicated, UE1 transmits a message to UE2 using the designated IDS-PUSCH/PDSCH resources (545). Subsequently, UE2 sends a HARQ ACK/NACK response to the eNB regarding the received IDS transmission (550). The eNB can send an ACK/NACK indication to UE1 (554). For example, a NACK can be sent indicating the transmission was not successfully received.

The ACK/NACK response can be sent using IDS-PUCCH resources as previously described. In some cases, the ACK/NACK response is sent via UE-specific assigned IDS-PUCCH, for example, in an LTE Format 2a or 2b (or format 2) type message. In other cases, the ACK/NACK response is sent via IDS-PUCCH resources, for example, in an LTE Format 1a or 1b type message. In cases where a LTE Format 1a or 1b type message is used, the specific IDS-PUCCH resources used for the transmission is derived from a mapping of the location of a resource used to send the DL control message to IDS-PUCCH resources.

As described in the embodiments, the allocation message can indicate the transmitting UE for the allocated IDS resources as described in the embodiments, and hence, in another allocation message the eNB may indicate UE2 as the transmitting UE. The eNB sends another allocation for IDS-PUSCH/PDSCH resources using a PDCCH DCI configured with the IDS- RNTI (555). The new data indicator (NDI) in the DCI indicates whether this is a HARQ re-transmission of a previously transmitted packet from UE2 to UE1 or the first HARQ transmission of the next packet. Using the resources indicated, UE2 transmits a message to UE1 using the designated IDS-PUSCH/PDSCH resources (560), the message including a new packet transmissions or retransmission of the previous packet as indicated by the NDI. Thereafter, UE1 sends a HARQ ACK/NACK response to the eNB regarding the last received IDS transmission (565). For example, an ACK can be sent indicating the transmission was successfully received. The eNB can send an ACK/NACK indication to UE1 (570).

Referring to the transmission from UE1 to UE2 (545) and subsequent feedback from UE2 to the eNB (550), in some instances, the eNB relays the UE2 ACK/NACK feedback to UE1, using the physical HARQ indicator channel (PHICH). In some embodiments, the indication may be transmitted via an IDS-specific PHICH different from a downlink transmission resource used for acknowledgement/negative acknowledgement (ACK/NACK) feedback for UE to eNB uplink transmissions. IDS-PHICH is specific for this inter-device session, and may be different from PHICH that is used for non-IDS UE-eNB communications. Note that in some cases, a further allocation for another IDS transmission from UE1 to UE2 can be sent with an NDI field in the PDCCH DCI that indicates a new transmission or re-transmission of previous packet. Hence, the NDI field may provide implicit indication of the ACK/NACK feedback.

In some embodiments, the resource allocation is "asynchronous HARQ" such that the PDCCH DCI allocates resources for a single IDS transmission; after an IDS transmission, UE1 receives an ACK/NACK response on the PHICH corresponding to the IDS transmission. UE1 can interpret the ACK/NACK feedback on its own and determine to retransmit if necessary in the next IDS transmission to UE2.

In some other embodiments, the resource allocation is "synchronous HARQ" such that the PDCCH message allocates resources for one or more periodic resources for an IDS packet transmission and potential retransmissions up to a maximum number of retransmissions; after an IDS transmission, UE1 receives either a further PDCCH DCI corresponding to the IDS transmission or an ACK/NACK response on the PHICH corresponding to the IDS transmission. If a PDCCH DCI corresponding to the IDS transmission is received, UE1 can determine if a new packet transmissions or retransmission is scheduled from the NDI. If a PDCCH DCI corresponding to the IDS transmission is not received, the UE can determine interpret the ACK/NACK feedback on the PHICH corresponding to the IDS transmission, and determine to retransmit if necessary in the next IDS transmission to UE2 according the synchronous HARQ assignment.

The above mentioned process of allocation/transmission of HARQ ACK/NACK feedback along with periodic sounding may continue until the inter-device session is terminated or the IDS is otherwise reconfigured by the eNB.

Depending on the configuration assigned by the eNB, one or both of the UEs send sounding reference signals (SRS) as indicated by the eNB session setup commands (530). The sounding reference signal may be specifically assigned for use in an IDS (i.e. an IDS-SRS), or the SRS may be the SRS normally assigned to a UE for UE-eNB communications.

Either UE1 or UE2 or both send an IDS-PUCCH/PDSCH message to the eNB indicating CSI of the received (IDS-)SRS from the other UE. In this example, the current receiver, UE2, may also send a scheduling request (SR) if UE2 has data that UE2 wishes to send to UE1.

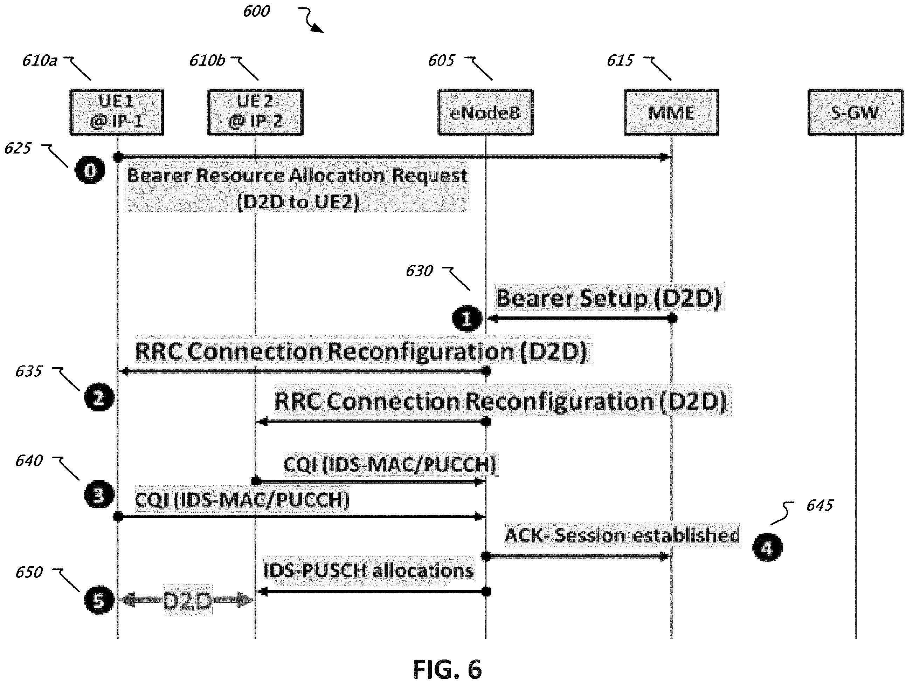

FIG. 6 is a message sequence diagram 600 illustrating an example network operation for an inter-device session. In this packet oriented UE-initiated mechanism 600, a first UE 610a (UE1) initiates a device to device setup to a second UE 610b (UE2) by sending a bearer resource allocation request to the network (625). The network can chose to ignore or grant this request based on device and network capabilities, as well as policies and traffic loading. If allowed, Mobility Management Entity (MME 615) sends a request to eNB 605 to initiate a device to device radio bearer connection between UE1 and UE2 (630). eNB 605 can provide IDS-RNTI and other setup information, and instructs UE1 and UE2 to report CQI received from the other UE's SRS/PUCCH/IDS-PUCCH signals (635). UE1 and UE2 report received channel conditions (e.g. CQI) of the device to device channel to eNB 605 (640). If device to device channel conditions are sufficient to establish a session, eNB 605 propagates successful "ACK" to the MME (645). The eNB 605 allocates PUSCH/PDSCH resources using IDS-RNTI encoded grants in PDCCH so that packet exchange between UE1 and UE2 now occurs over the device to device connection, bypassing the network infrastructure (650), as described in FIG. 5.

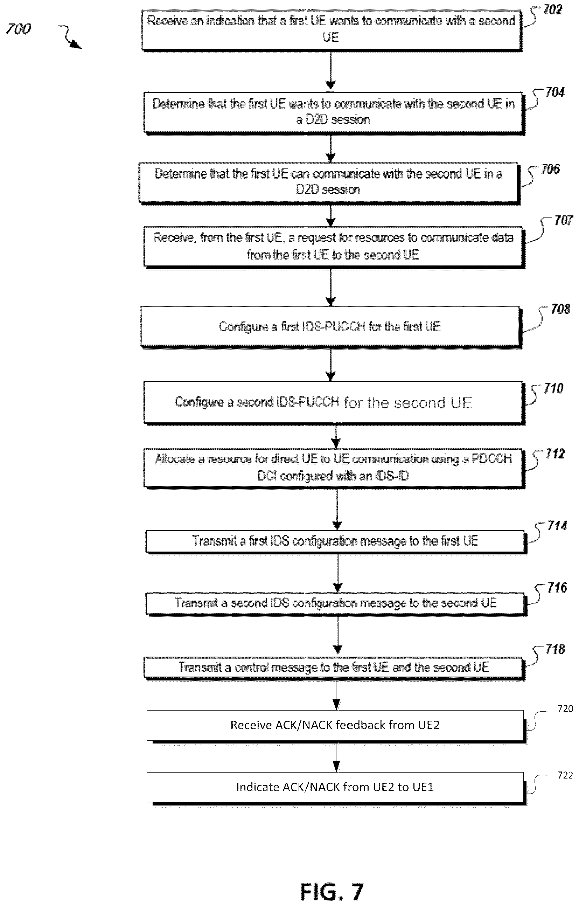

FIG. 7 is a flow chart 700 illustrating an example process of inter-device session communications that may be performed by a network node of a mobile communications network. The network node may be an evolved Node B (eNB) of a communications network, such as a long term evolution (LTE) network, or another network node, described above. The network node can receive an indication (702) that a first UE (UE1) wants to communicate with a second UE (UE2). This indication can be a received data packet addressed to the second UE, or the indication can be a request for resources. The indication can also include a request or indication that UE1 wants to communicate with UE2 in an inter-device session (704). In certain instances, the network node can determine (706) that an inter-device session may be possible between UE1 and UE2. The network node can make this determination based on known information about UE1 and UE2, such as whether the UEs are in the same cell. The network node can also base this determination on network loads and channel conditions - information that is known or that can be discovered through feedback received from the UEs (discussed more below). The network node can also determine, without an explicit request from the UEs, that an inter-device session can occur and can initiate an inter-device session without a request from the UEs. In short, the UE or the network node can initiate the inter-device session.

In certain instances, the network node can receive a request (e.g., from UE1) for resources to communicate data from UE1 to a second UE (UE2) (707). The network node can use the request for resources to initiate an inter-device session between UE1 and UE2. Such an initiation can be executed based on a number of other factors, including those listed above.

In some embodiments after the network node has determined that the network will initiate an inter-device session, the network node can configure a first IDS-PUCCH for UE1 (708), on which UE1 can transmit a feedback message to the eNB. The network node can also configure a second IDS-PUCCH for UE2

(710), on which UE2 can transmit a feedback message to the eNB. The network node can also allocate resources for the UEs to transmit and/or receive data in an inter-device session (712). The resources may be allocated using a PDCCH DCI configured with an IDS-Identifier.

The network node can transmit to UE1 UE1-configuration information for an inter-device session (IDS) between UE1 and UE2 (714). The UE1 configuration information can include a radio network identifier. Similarly, configuration information can be sent to UE2 (716). This configuration information may include configuration information used by UE2 to measure signals from UE1 The configuration information transmitted to UE1 (714) and UE2 (716) may also contain the first IDS-PUCCH configuration (708) and the second IDS-PUCCH) configuration, respectively. The network node can also transmit a control message that is configured with the radio network identifier and identifies a radio resource for the IDS, such that UE1 is permitted to transmit data directly to UE2 via the radio resource (718). In some cases, the control message (718) may be the same as the allocation message (712). Put differently, the network node can transmit a setup message to UE1. The set-up message can include an IDS-physical uplink control channel (IDS-PUCCH), a radio network identifier, such as an IDS-radio network temporary identifier (IDS-RNTI), etc. In certain implementations, configuration information can be used by UE1 to measure signals from UE2 for feedback purposes, such as channel state indicators, rank indicators, precoding matrix indicators, etc., from physical uplink control channel (PUCCH), reference signals, sounding reference signal (SRS), etc.

The network node may also receive a feedback message (720), for example, including positive or negative acknowledgement (ACK/NACK) from UE2 regarding the IDS transmission from UE1 to UE2. The AKC/NACK feedback may be sent from UE2 via a configured IDS-PUCCH. In some cases, the network node can indicate the ACK/NACK feedback from UE2 regarding the IDS transmission to UE1 (722) via PHICH, NDI of the PDCCH DCI, or other methods as described in the embodiments.

In certain implementations, UE1 configuration information can be transmitted in a radio resource control (RRC) message. The RRC message can be transmitted via a downlink shared channel, such as a physical downlink shared channel (PDSCH).

A first reference signal can be configured for UE1. Configuration information including the first reference signal configuration can be provided to UE2, e.g., in an radio resource control (RRC) message. The first reference signal configuration can identify a sounding reference signal (SRS) resource. The first reference signal configuration may be associated with a physical uplink control channel configuration. The physical uplink control channel configuration may be an IDS-specific physical control channel configuration for an inter-device session between UE1 and UE2 or the configuration may be the physical uplink control channel normally allocated to a UE for UE-eNB communications.

The reference signal configuration identifies a reference signal for UE2 to monitor from UE1, which may be a reference signal resource specifically allocated for the inter-device session. The reference signal can be used by UE2 to determine a channel state between UE1 and UE2. The reference signal can also be used by UE2 to determine timing alignment for the inter-device session. The network node can receive channel state indicator (CSI) from UE2. For example, the network node can receive a channel state indicator on an IDS-specific physical uplink control channel. The channel state indicator can indicate a channel state between UE1 and UE2. The channel state indicator can be received from UE2 via an IDS-specific physical uplink control channel. The channel state indicator can include one or more of a channel quality indicator (CQI), precoding matrix index (PMI), rank indicator (RI), or precoding type indicator (PTI). The CSI can report a channel state of a direct radio channel from UE1 to UE2.

The network node can determine, based on feedback from at least one of UE1 or UE2, that the IDS has been established. For example, the network node can determine, based on the channel state indicator received from UE2, that the IDS has been established.

In certain implementations, transmission timing for the IDS radio resource can be based on a timing alignment for an uplink resource from UE1 to the network node.

In certain implementations, the configuration information and/or control messages can be shared between the UEs or can be different for the different UEs. For example, a first IDS physical uplink control channel (IDS-PUCCH1) can be configured for use by UE1. The first IDS-PUCCH1 can provide an uplink resource for UE1 to transmit an uplink control message related to the IDS. A second IDS physical uplink control channel (IDS-PUCCH2) can be configured for use by UE2. The second IDS-PUCCH2 can provide an uplink resource for UE2 to transmit an uplink control message related to the IDS. The uplink control message can include one or more of an IDS schedule request, IDS channel state reporting, or IDS acknowledgement/negative acknowledgement (ACK/NACK) feedback. The IDS-PUCCH2 can be associated with the radio network identifier, such as a RNTI.

In certain implementations, an IDS physical uplink control channel (IDS-PUCCH1) can be configured that is associated with the inter-device session. The IDS-PUCCH1 can be configured for use with the (IDS-) radio network identifier. The IDS-PUCCH1 may be configured for use with the cell radio network temporary identifier (CRNTI) of UE1. The IDS-PUCCH1 may be in addition to a physical uplink control channel (PUCCH) associated with a CRNTI of UE1. The IDS-PUCCH1 may be configured in a sub-band associated with the IDS radio resource for the inter-device session. In some implementations, the IDS-PUCCH may be allocated in sub-bands other than at the edges of the UL spectrum. In certain implementations, the IDS-PUCCH1 is configured prior to transmitting the control message. A configuration message can be transmitted to UE2, the configuration message indicating one or both of the IDS-PUCCH1 or a reference signal associated with the IDS-PUCCH1, wherein at least a portion of the IDS-PUCCH1 or the reference signal associated with the at least a portion of the IDS-PUCCH1 is used by UE2 to determine a channel state for the sub-band associated with the IDS radio resource for the inter-device session. An IDS radio resource sub-band can be determined based, at least in part, on the channel state for the sub-band associated with the IDS radio resource.

The network node can also configure an IDS physical uplink control channel (IDS-PUCCH1) that is associated with the inter-device session and configured for use with the (IDS-) radio network identifier. The IDS-PUCCH1 can be transmitting in addition to a physical uplink control channel (PUCCH) associated with a CRNTI of UE1. The IDS-PUCCH1 and the PUCCH can be configured in the same radio resources. In some instances, the IDS-PUCCH1 can be configured for use by only UE1. In these instances, a second IDS physical uplink control channel (IDS-PUCCH2) can be configured for the inter-device session. The IDS-PUCCH2 would be configured for use by only UE2. The IDS-PUCCH2 may be configured for acknowledgement (ACK) or negative acknowledgement (NACK) feedback from UE2 associated with the inter-device session.

The network node can receive a feedback message from UE2 that includes feedback indicating whether UE2 received a transmission from UE1. The control message can be transmitted via a downlink control channel. The feedback message from UE2 can be received on an uplink transmission resource that is derived from a mapping of an index of the downlink control channel. The uplink transmission resource may be an IDS uplink transmission resource that is different from a further uplink transmission resource for ACK/NACK feedback for eNB to UE downlink transmissions. The uplink transmission resource may be dedicated for ACK/NACK feedback for UE to UE IDS transmissions. In some instances, the control message is transmitted using a PDCCH resource configured with the radio network identifier. The feedback message from UE2 may be received on an IDS-PUCCH resource derived from a mapping of a control channel element (CCE) of the PDCCH. In some instances, the feedback may include a hybrid automatic repeat request (HARQ) acknowledgement/negative acknowledgement (ACK/NACK) response from UE2. When the HARQ ACK/NACK response is a NACK, the network node can transmit a further control message that includes an allocation of a further radio resource for UE1 to retransmit the previous transmission. The feedback indicator may include a channel quality indicator regarding the quality of the transmission from UE1 to UE2.

The network node can transmit, to UE1, an indication of the feedback received from UE2. The indication of the feedback may be sent as a new data indicator of a downlink control information (DCI) element of a physical downlink control channel. The indication of the feedback may be sent on a physical hybrid automatic repeat request (HARQ) indication channel (PHICH). The indication may be transmitted via an IDS-specific PHICH different from a downlink transmission resource for acknowledgement/negative acknowledgement (ACK/NACK) feedback for UE to eNB uplink transmissions. IDS-PHICH is specific for this inter-device session, and may be different from PHICH that is used for non-IDS UE-eNB communications.

In certain aspects of the implementations, the radio resource for the inter-device session may include one of LTE physical uplink shared channel (PUSCH) resources or LTE physical downlink shared channel (PDSCH) resources.

The network node may transmit, to UE2, UE2 configuration information for the IDS between UE1 and UE2. UE2 configuration information may include the same radio network identifier as UE1. In some implementations, the radio network identifier is an inter-device session radio network temporary identifier (IDS-RNTI).

In some implementations, the UE1 configuration information further includes a session UE1-identifier (UE1-ID), and the UE2 configuration information further includes a session UE2-identifier (UE2-ID), the UE1-ID being different from the UE2-ID. The control message that includes an allocation of the radio resource for the IDS further includes the radio network identifier and an indication of either the UE1-ID or the UE2-ID. Transmitting the control message may also include or involve transmitting the control message to UE1 and UE2. The control message indicates that UE1 is to transmit and UE2 is to receive if the control message indicates the UE1-ID, and the control message indicates that UE2 is to transmit and UE1 is to receive if the control message indicates the UE2-ID.

For the same radio network identifier, the UE1 configuration information indicates that UE1 is a transmitter and the UE2 configuration information indicates that UE2 is a receiver. The UE1 configuration information can be a first UE1 configuration information and the UE2 configuration information can be a first UE2 configuration information. The radio network identifier included in first UE1 configuration information and first UE2 configuration information can be a first radio network identifier. In certain instances, the network node can transmit a second UE1 configuration information to UE1. The network node can also transmit a second UE2 configuration information to UE2. The second UE1 configuration information and the second UE2 configuration information include a second radio network identifier. The second radio network identifier is different from the first radio network identifier and indicates that, for the second radio network identifier, UE1 is a receiver and UE2 is a transmitter.

In certain aspects of the implementations, the radio network identifier included in the UE1 configuration information is a first radio network identifier, and the UE2 configuration information includes a second radio network identifier. The first radio network identifier may be a first IDS radio network temporary identifier (IDS-RNTI-UE1), and the second radio network identifier maybe a second IDS radio network temporary identifier (IDS-RNTI-UE2).

In certain implementations, the network node may transmit, to UE1, a transmit power control radio network identifier for power control commands associated with the IDS. The transmit power control radio network identifier can be included in UE1 configuration information. The network node may transmit at least one power control command configured with the transmit power control radio network identifier, the power control command controlling the transmit power for transmissions between UE1 and UE2. The power control command can be configured to adjust transmit power of a reference signal transmitted by UE1 and received by UE2 for channel state information measurement. The transmit power control radio network identifier maybe a Radio Network Temporary Identifier (RNTI).

In some instances, more than two UEs can be involved in the inter-device session. For example, the network node can transmit, to a third UE (UE3), UE3 configuration information for the IDS among UE1, UE2, and UE3.

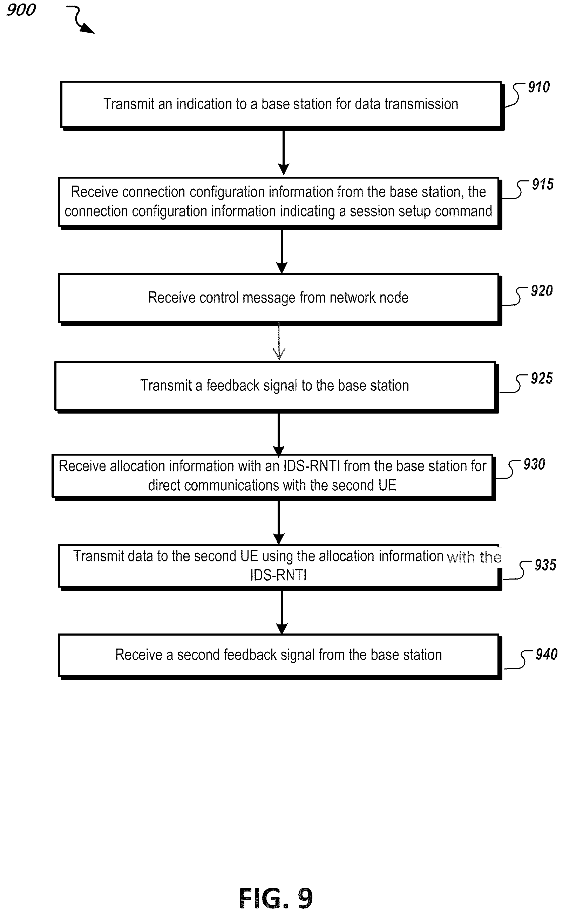

FIG. 9 is a flow chart 900 illustrating an example process of inter-device session communications that may be performed by a user equipment (UE) operating in a wireless communications network. The UE (UE1) may be a cellular handset, such as a cellular phone or smartphone, or may be a tablet PC, or may be any other user equipment that can communicate with other user equipment in a wireless communications network, such as a long term evolution (LTE) network. UE1 can transmit an indication that UE1 wants to communicate with a second UE (UE2) (910). This indication can be a data packet addressed to the second UE, or the indication can be a request for resources. The indication can also include a request or indication that UE1 wants to communicate with UE2 in an inter-device session. In certain instance, the network node can determine that an inter-device session can occur between UE1 and UE2.

UE1 can receive from the network node UE1-configuration information for an inter-device session (IDS) between the UE and UE2 (915). The UE1 configuration information can include a radio network identifier. Put differently, UE1 can receive a set-up message from the network node. The set-up message can include an IDS-physical uplink control channel (IDS-PUCCH), a radio network identifier, such as an IDS-radio network temporary identifier (IDS-RNTI), etc. In certain implementations, configuration information can be used by UE1 to measure signals from UE2, such as physical uplink control channel (PUCCH), sounding reference signal (SRS), channel state indicators, rank indicators, precoding matrix indicators, etc. Such signals can be used for feedback purposes. Similarly, configuration information can be sent to UE2 and used by UE2 to measure signals from UE1.

The UE1 can also receive a control message from the network node (920). UE1 can also receive (e.g., with the control message) a message configured with the radio network identifier and an identification of a radio resource for the IDS, such that UE1 is permitted to transmit data directly to UE2 via the radio resource (930). UE1 can send data to UE2 using the IDS resources indicated in allocation information configured with the IDS-RNTI (935). UE1 can receive feedback information or a feedback signal from the base station (940).

In certain implementations, UE1 configuration information can be received in a radio resource control (RRC) message. The control message can be received via a downlink control channel, such as a physical downlink control channel (PDCCH) or enhanced physical downlink control channel (ePDCCH). The control message can be received in a Downlink Control Information (DCI) element of the downlink control channel.

A first reference signal can be configured for UE1. Configuration information including the first reference signal configuration can be provided to UE2, e.g., in an radio resource control (RRC) message. The first reference signal configuration can identify a sounding reference signal (SRS) resource. The first reference signal configuration may be associated with a physical uplink control channel configuration. The physical uplink control channel configuration is an IDS-specific physical control channel configuration for an inter-device session between UE1 and UE2.

The reference signal configuration identifies a reference signal for UE2 to monitor from UE1, and can also identify a reference signal resource for the inter-device session. The reference signal can be used by UE2 to determine a channel state between UE1 and UE2. The reference signal can also be used by UE2 to determine timing alignment for the inter-device session. The network node can receive channel state indicator (CSI) from UE2. For example, the network node can receive a channel state indicator on an IDS-specific physical uplink control channel. The channel state indicator can indicate a channel state between UE1 and UE2. The channel state indicator can be received from UE2 via an IDS-specific physical uplink control channel. The channel state indicator can include one or more of a channel quality indicator (CQI), precoding matrix index (PMI), rank indicator (RI), or precoding type indicator (PTI). The CSI can report a channel state of a direct radio channel from UE1 to UE2.

UE1 can provide feedback to the network node, from which the network node can determine whether the IDS has been established (925). For example, the network node can determine, based on the channel state indicator received from UE1 or UE2, that the IDS has been established.

In certain implementations, transmission timing for the IDS radio resource can be based on a timing alignment for an uplink resource from UE1 to the network node.

UE2 may provide feedback, such as acknowledgement/negative acknowledgement (ACK/NACK) feedback, to the eNB in regarding the IDS transmission from UE1 to UE2 (935). The feedback sent to the eNB can be over the IDS-PUCCH or other methods as described in the embodiments.

UE1 can receive an indication of the feedback received by the eNB from UE2 (940). The indication of the feedback may be sent as a new data indicator of a downlink control information (DCI) element of a physical downlink control channel. The indication of the feedback may be sent on a physical hybrid automatic repeat request (HARQ) indication channel (PHICH). The indication may be transmitted via an IDS-specific PHICH different from a downlink transmission resource for acknowledgement/negative acknowledgement (ACK/NACK) feedback for UE to eNB uplink transmissions. IDS-PHICH is specific for this inter-device session, and may be different from PHICH that is used for non-IDS UE-eNB communications.

In certain aspects of the implementations, the radio resource for the inter-device session may include one of LTE physical uplink shared channel (PUSCH) resources or LTE physical downlink shared channel (PDSCH) resources.

The network node may transmit, to UE2, UE2 configuration information for the IDS between UE1 and UE2. UE2 configuration information may include the same radio network identifier as UE1. In some implementations, the radio network identifier is an inter-device session radio network temporary identifier (IDS-RNTI).

In some implementations, the UE1 configuration information further includes a session UE1-identifier (UE1-ID), and the UE2 configuration information further includes a session UE2-identifier (UE2-ID), the UE1-ID being different from the UE2-ID. The control message that includes an allocation of the radio resource for the IDS further includes the radio network identifier and an indication of either the UE1-ID or the UE2-ID. Transmitting the control message may also include or involve transmitting the control message to the UE1 and UE2, and the control message indicates that UE1 is to transmit and UE2 is to receive if the control message indicates the UE1-ID and the control message indicates that UE2 is to transmit and UE1 is to receive if the control message indicates the UE2-ID.

In implementations where a single radio network identifier is used, the UE1 configuration information can indicate that the UE1 is a transmitter and the UE2 configuration information indicates that UE2 is a receiver (e.g., in situations where that is true). The UE1 configuration information can be a first UE1 configuration information and the UE2 configuration information can be a first UE2 configuration information. The radio network identifier included in first UE1 configuration information and first UE2 configuration information can be a first radio network identifier. In certain instances, the network node can transmit a second UE1 configuration information to UE1. The network node can also transmit a second UE2 configuration information to UE2. The second UE1 configuration information and the second UE2 configuration information includes a second radio network identifier, the second radio network identifier different from the first radio network identifier and indicates that, for the second radio network identifier, UE1 is a receiver and UE2 is a transmitter.

While several implementations have been provided in the present disclosure, it should be understood that the disclosed systems and methods may be embodied in many other specific forms without departing from the scope of the present disclosure. The present examples are to be considered as illustrative and not restrictive, and the intention is not to be limited to the details given herein. For example, the various elements or components may be combined or integrated in another system or certain features may be omitted, or not implemented.

Also, techniques, systems, subsystems and methods described and illustrated in the various implementations as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the scope disclosed herein.

## Claims

1. A method performed by a first user equipment, UE, (102a, 410a, 610a) the method comprising:
signaling, by the first UE, capabilities that indicate whether the first UE is able to receive inter-device session, IDS, data and downlink data from a network node (112a, 112b, 405, 605) in one subframe, wherein the signaled capabilities cause the network node to schedule the IDS data and the downlink data from the network node in the one subframe;
receiving configuration information for the first UE, UE1 configuration information, for an IDS between the first UE and a second UE (102b, 410b, 610b), the UE1 configuration information including a radio network identifier; and
receiving a control message configured with the radio network identifier and a radio resource identifier, the radio resource identifier corresponding to an IDS radio resource for transmitting data directly from the first UE to the second UE, **characterised in that**
the signaled capabilities comprise a received signal level from the second UE when the second UE is transmitting, and wherein the UE1 configuration information comprises an IDS power level, the IDS power level being managed by the network node based on the received signal level.

2. The method of claim 1, wherein transmission timing for the IDS radio resource is based on a timing alignment for an uplink resource from the first UE to the network node.

3. The method of claim 1, further comprising transmitting a request, to the network node, for a transmission resource to send data from the first UE to the second UE.

4. The method of claim 1, further comprising transmitting data directly to the second UE during the IDS.

5. The method of claim 1, further comprising:
receiving a set-up message, the set-up message including an IDS physical uplink control channel, IDS-PUCCH, that is associated with the IDS and configured for use with the radio network identifier; and
transmitting an uplink control message using an uplink resource provided by the IDS-PUCCH.

6. The method of claim 5, wherein the uplink control message includes one or more of: an IDS schedule request, IDS channel state reporting, or IDS acknowledgement/negative acknowledgement, ACK/NACK, feedback.

7. The method of claim 1, further comprising measuring signals received from the second UE based at least partly upon the UE1 configuration information, and using a measurement to determine the IDS channel quality.

8. A first user equipment, UE, (102a, 410a, 610a) comprising:
a transceiver configured to:
signal capabilities that indicate whether the first UE is able to receive inter-device session, IDS, data and downlink data from a network node (112a, 112b, 405, 605) in one subframe, wherein the signaled capabilities cause the network node to schedule the IDS data and the downlink data from the network node in the one subframe;
receive configuration information for the first UE, UE1 configuration information, for an IDS between the first UE and a second UE (102b, 410b, 610b), the UE1 configuration information including a radio network identifier; and
receive a control message configured with the radio network identifier and a radio resource identifier, the radio resource identifier corresponding to an IDS radio resource for transmitting data directly from the first UE to the second UE, **characterised in that**
the signaled capabilities comprise a received signal level from the second UE when the second UE is transmitting, and wherein the UE1 configuration information comprises an IDS power level, the IDS power level being managed by the network node based on the received signal level.

9. The UE of claim 8, wherein transmission timing for the IDS radio resource is based on a timing alignment for an uplink resource from the first UE to the network node.

10. The UE of claim 8, wherein the transceiver is further configured to transmit a request, to the network node, for a transmission resource to send data from the first UE to the second UE.

11. The UE of claim 8, wherein the transceiver is further configured to transmit data directly to the second UE during the IDS.

12. A method performed by a network node (112a, 112b, 405, 605), the method comprising:
receiving, from a first user equipment, UE, (102a, 410a, 610a) capabilities that indicate whether the first UE is able to receive inter-device session, IDS, data and downlink data from a network node in one subframe, wherein the received capabilities cause the network node to schedule the IDS data and the downlink data from the network node in the one subframe;
sending configuration information for the first UE, UE1 configuration information, for an IDS between the first UE and a second UE (102b, 410b, 610b), the UE1 configuration information including a radio network identifier; and
sending a control message configured with the radio network identifier and a radio resource identifier, the radio resource identifier corresponding to an IDS radio resource for transmitting data directly from the first UE to the second UE, **characterised in that**
the signaled capabilities comprise a received signal level from the second UE when the second UE is transmitting, and wherein the UE1 configuration information comprises an IDS power level, the IDS power level being managed by the network node based on the received signal level.

13. A network node (112a, 112b, 405, 605), configured to perform the steps of claim 12.

## Patentansprüche

1. Ein Verfahren, das von einem ersten Endgerät, UE, (102a, 410a, 610a) durchgeführt wird, wobei das Verfahren Folgendes beinhaltet:
Signalisieren, durch das erste UE, von Fähigkeiten, die anzeigen, ob das erste UE dazu in der Lage ist, Inter-Device-Sitzungsdaten, IDS-Daten, und Downlink-Daten von einem Netzwerkknoten (112a, 112b, 405, 605) in einem einzelnen Subframe zu empfangen, wobei die signalisierten Fähigkeiten den Netzwerkknoten dazu veranlassen, die IDS-Daten und die Downlink-Daten von dem Netzwerkknoten in dem einzelnen Subframe zu terminieren;
Empfangen von Konfigurationsinformationen für das erste UE, UE1-Konfigurationsinformationen, für eine IDS zwischen dem ersten UE und einem zweiten UE (102b, 410b, 610b), wobei die UE1-Konfigurationsinformationen eine Funknetzkennung umfassen; und
Empfangen einer mit der Funknetzkennung und einer Funkressourcenkennung konfigurierten Steuerungsnachricht, wobei die Funkressourcenkennung einer IDS-Funkressource zum direkten Übertragen von Daten von dem ersten UE an das zweite UE entspricht, **dadurch gekennzeichnet, dass**
die signalisierten Fähigkeiten einen Empfangssignalpegel von dem zweiten UE beinhalten, wenn das zweite UE überträgt, und wobei die UE1-Konfigurationsinformationen einen IDS-Leistungspegel beinhalten, wobei der IDS-Leistungspegel auf der Basis des Empfangssignalpegels von dem Netzwerkknoten verwaltet wird.

2. Verfahren gemäß Anspruch 1, wobei das Übertragungs-Timing für die IDS-Funkressource auf einem Timing-Abgleich für eine Uplink-Ressource von dem ersten UE zu dem Netzwerkknoten basiert.

3. Verfahren gemäß Anspruch 1, das ferner das Übertragen, an den Netzwerkknoten, einer Anforderung einer Übertragungsressource zum Senden von Daten von dem ersten UE an das zweite UE beinhaltet.

4. Verfahren gemäß Anspruch 1, das ferner das Übertragen von Daten direkt an das zweite UE während der IDS beinhaltet.

5. Verfahren gemäß Anspruch 1, das ferner Folgendes beinhaltet:
Empfangen einer Set-up-Nachricht, wobei die Set-up-Nachricht einen physikalischen IDS-Uplink-Steuerungskanal, IDS-PUCCH, umfasst, der mit der IDS assoziiert ist und zur Verwendung mit der Funknetzkennung konfiguriert ist; und
Übertragen einer Uplink-Steuerungsnachricht unter Verwendung einer vom IDS-PUCCH bereitgestellten Uplink-Ressource.

6. Verfahren gemäß Anspruch 5, wobei die Uplink-Steuerungsnachricht eines oder mehrere von Folgendem umfasst: eine IDS-Terminierungsanfrage, IDS-Kanalstatusberichte oder eine IDS-Rückmeldung zur Empfangsbestätigung/Ablehnung, ACK/NACK.

7. Verfahren gemäß Anspruch 1, das ferner das Messen von Signalen, die von dem zweiten UE empfangen wurden und mindestens teilweise auf den UE1-Konfigurationsinformationen basieren, und das Verwenden einer Messung zum Bestimmen der IDS-Kanalqualität beinhaltet.

8. Ein erstes Endgerät, UE, (102a, 410a, 610a) das Folgendes beinhaltet:
einen Sende-Empfänger, der zu Folgendem konfiguriert ist:
Signalisieren von Fähigkeiten, die anzeigen, ob das erste UE dazu in der Lage ist, Inter-Device-Sitzungsdaten, IDS-Daten, und Downlink-Daten von einem Netzwerkknoten (112a, 112b, 405, 605) in einem einzelnen Subframe zu empfangen, wobei die signalisierten Fähigkeiten den Netzwerkknoten dazu veranlassen, die IDS-Daten und die Downlink-Daten von dem Netzwerkknoten in dem einzelnen Subframe zu terminieren;
Empfangen von Konfigurationsinformationen für das erste UE, UE1-Konfigurationsinformationen, für eine IDS zwischen dem ersten UE und einem zweiten UE (102b, 410b, 610b), wobei die UE1-Konfigurationsinformationen eine Funknetzkennung umfassen; und
Empfangen einer mit der Funknetzkennung und einer Funkressourcenkennung konfigurierten Steuerungsnachricht, wobei die Funkressourcenkennung einer IDS-Funkressource zum direkten Übertragen von Daten von dem ersten UE an das zweite UE entspricht, **dadurch gekennzeichnet, dass**
die signalisierten Fähigkeiten einen Empfangssignalpegel von dem zweiten UE beinhalten, wenn das zweite UE überträgt, und wobei die UE1-Konfigurationsinformationen einen IDS-Leistungspegel beinhalten, wobei der IDS-Leistungspegel auf der Basis des Empfangssignalpegels von dem Netzwerkknoten verwaltet wird.

9. UE gemäß Anspruch 8, wobei das Übertragungs-Timing für die IDS-Funkressource auf einem Timing-Abgleich für eine Uplink-Ressource von dem ersten UE zu dem Netzwerkknoten basiert.

10. UE gemäß Anspruch 8, wobei der Sende-Empfänger ferner dazu konfiguriert ist, an den Netzwerkknoten eine Anforderung einer Übertragungsressource zum Senden von Daten von dem ersten UE an das zweite UE zu übertragen.

11. UE gemäß Anspruch 8, wobei der Sende-Empfänger ferner dazu konfiguriert ist, während der IDS Daten direkt an das zweite UE zu übertragen.

12. Ein Verfahren, das von einem Netzwerkknoten (112a, 112b, 405, 605) durchgeführt wird, wobei das Verfahren Folgendes beinhaltet:
Empfangen von einem ersten Endgerät, UE, (102a, 410a, 610a) von Fähigkeiten, die anzeigen, ob das erste UE dazu in der Lage ist, Inter-Device-Sitzungsdaten, IDS-Daten, und Downlink-Daten von einem Netzwerkknoten in einem einzelnen Subframe zu empfangen, wobei die empfangenen Fähigkeiten den Netzwerkknoten dazu veranlassen, die IDS-Daten und die Downlink-Daten von dem Netzwerkknoten in dem einzelnen Subframe zu terminieren;
Senden von Konfigurationsinformationen für das erste UE, UE1-Konfigurationsinformationen, für eine IDS zwischen dem ersten UE und einem zweiten UE (102b, 410b, 610b), wobei die UE1-Konfigurationsinformationen eine Funknetzkennung umfassen; und
Senden einer mit der Funknetzkennung und einer Funkressourcenkennung konfigurierten Steuerungsnachricht, wobei die Funkressourcenkennung einer IDS-Funkressource zum direkten Übertragen von Daten von dem ersten UE an das zweite UE entspricht, **dadurch gekennzeichnet, dass**
die signalisierten Fähigkeiten einen Empfangssignalpegel von dem zweiten UE beinhalten, wenn das zweite UE überträgt, und wobei die UE1-Konfigurationsinformationen einen IDS-Leistungspegel beinhalten, wobei der IDS-Leistungspegel auf der Basis des Empfangssignalpegels von dem Netzwerkknoten verwaltet wird.

13. Ein Netzwerkknoten (112a, 112b, 405, 605), der dazu konfiguriert ist, die Schritte von Anspruch 12 durchzuführen.

## Revendications

1. Un procédé réalisé par un premier équipement utilisateur, UE, (102a, 410a, 610a), le procédé comprenant :
la signalisation, par le premier UE, de capacités qui indiquent si le premier UE est à même de recevoir des données de session inter-dispositifs, IDS, et des données de liaison descendante depuis un nœud de réseau (112a, 112b, 405, 605) dans une même sous-trame, dans lequel les capacités signalées amènent le nœud de réseau à planifier les données d'IDS et les données de liaison descendante provenant du nœud de réseau dans cette même sous-trame ;
la réception d'informations de configuration pour le premier UE, informations de configuration UE1, pour une IDS entre le premier UE et un deuxième UE (102b, 410b, 610b), les informations de configuration UE1 incluant un identifiant de réseau radio ; et
la réception d'un message de commande configuré avec l'identifiant de réseau radio et un identifiant de ressource radio, l'identifiant de ressource radio correspondant à une ressource radio d'IDS pour la transmission de données directement depuis le premier UE jusqu'au deuxième UE, **caractérisé en ce que**
les capacités signalées comprennent un niveau de signal reçu depuis le deuxième UE lorsque le deuxième UE est en train de transmettre, et dans lequel les informations de configuration UE1 comprennent un niveau de puissance d'IDS, le niveau de puissance d'IDS étant géré par le nœud de réseau sur la base du niveau de signal reçu.

2. Le procédé de la revendication 1, dans lequel la temporisation de transmission pour la ressource radio d'IDS est basée sur un alignement temporel pour une ressource de liaison montante depuis le premier UE jusqu'au nœud de réseau.

3. Le procédé de la revendication 1, comprenant en outre la transmission d'une demande, au nœud de réseau, pour qu'une ressource de transmission envoie des données depuis le premier UE jusqu'au deuxième UE.

4. Le procédé de la revendication 1, comprenant en outre la transmission de données directement jusqu'au deuxième UE pendant l'IDS.

5. Le procédé de la revendication 1, comprenant en outre :
la réception d'un message d'établissement, le message d'établissement incluant un canal de commande de liaison montante physique d'IDS, IDS-PUCCH (« IDS physical uplink control channel »), qui est associé à l'IDS et configuré pour être utilisé avec l'identifiant de réseau radio ; et
la transmission d'un message de commande de liaison montante en utilisant une ressource de liaison montante fournie par l'IDS-PUCCH.

6. Le procédé de la revendication 5, dans lequel le message de commande de liaison montante inclut un ou plusieurs éléments parmi : une demande de planification d'IDS, un rapport d'état de canal d'IDS, ou un retour d'accusé de réception/accusé de réception négatif, ACK/NACK (« acknowledgement/negative acknowledgement »), d'IDS.

7. Le procédé de la revendication 1, comprenant en outre la mesure de signaux reçus depuis le deuxième UE sur la base au moins en partie des informations de configuration UE1, et l'utilisation d'une mesure afin de déterminer la qualité de canal d'IDS.

8. Un premier équipement utilisateur, UE, (102a, 410a, 610a) comprenant :
un émetteur-récepteur configuré pour :
signaler des capacités qui indiquent si le premier UE est à même de recevoir des données de session inter-dispositifs, IDS, et des données de liaison descendante depuis un nœud de réseau (112a, 112b, 405, 605) dans une même sous-trame, dans lequel les capacités signalées amènent le nœud de réseau à planifier les données d'IDS et les données de liaison descendante provenant du nœud de réseau dans cette même sous-trame ;
recevoir des informations de configuration pour le premier UE, informations de configuration UE1, pour une IDS entre le premier UE et un deuxième UE (102b, 410b, 610b), les informations de configuration UE1 incluant un identifiant de réseau radio ; et
recevoir un message de commande configuré avec l'identifiant de réseau radio et un identifiant de ressource radio, l'identifiant de ressource radio correspondant à une ressource radio d'IDS pour la transmission de données directement depuis le premier UE jusqu'au deuxième UE, **caractérisé en ce que**
les capacités signalées comprennent un niveau de signal reçu depuis le deuxième UE lorsque le deuxième UE est en train de transmettre, et dans lequel les informations de configuration UE1 comprennent un niveau de puissance d'IDS, le niveau de puissance d'IDS étant géré par le nœud de réseau sur la base du niveau de signal reçu.

9. L'UE de la revendication 8, dans lequel la temporisation de transmission pour la ressource radio d'IDS est basée sur un alignement temporel pour une ressource de liaison montante depuis le premier UE jusqu'au nœud de réseau.

10. L'UE de la revendication 8, dans lequel l'émetteur-récepteur est en outre configuré pour transmettre une demande, au nœud de réseau, pour qu'une ressource de transmission envoie des données depuis le premier UE jusqu'au deuxième UE.

11. L'UE de la revendication 8, dans lequel l'émetteur-récepteur est en outre configuré pour transmettre des données directement jusqu'au deuxième UE pendant l'IDS.

12. Un procédé réalisé par un nœud de réseau (112a, 112b, 405, 605), le procédé comprenant :
la réception, depuis un premier équipement utilisateur, UE, (102a, 410a, 610a), de capacités qui indiquent si le premier UE est à même de recevoir des données de session inter-dispositifs, IDS, et des données de liaison descendante depuis un nœud de réseau dans une même sous-trame, dans lequel les capacités reçues amènent le nœud de réseau à planifier les données d'IDS et les données de liaison descendante provenant du nœud de réseau dans cette même sous-trame ;
l'envoi d'informations de configuration pour le premier UE, informations de configuration UE1, pour une IDS entre le premier UE et un deuxième UE (102b, 410b, 610b), les informations de configuration UE1 incluant un identifiant de réseau radio ; et
l'envoi d'un message de commande configuré avec l'identifiant de réseau radio et un identifiant de ressource radio, l'identifiant de ressource radio correspondant à une ressource radio d'IDS pour la transmission de données directement depuis le premier UE jusqu'au deuxième UE, **caractérisé en ce que**
les capacités signalées comprennent un niveau de signal reçu depuis le deuxième UE lorsque le deuxième UE est en train de transmettre, et dans lequel les informations de configuration UE1 comprennent un niveau de puissance d'IDS, le niveau de puissance d'IDS étant géré par le nœud de réseau sur la base du niveau de signal reçu.

13. Un nœud de réseau (112a, 112b, 405, 605), configuré pour réaliser les étapes de la revendication 12.
